# EUROPEAN PATENT APPLICATION

(11) **EP 4 776 507 A1**
(43) Date of publication of application: **15.07.2026**
(21) Application number: 25151876.7
(22) Date of filing: 14.01.2025
(51) Int. Cl.: H02P 29/024, H02P 3/18, E05F 15/63, H02H 3/08, H02P 6/08

(54) **AN ELECTRICALLY OPERATED GATE ACTUATOR**

(71) Applicant: Locinox, 8790 Waregem (BE)
(72) Inventor: LEMAHIEU, Joris, 8790 Waregem (BE)
(74) Representative: Gevers Patents

(57) **Abstract**

The invention relates to a gate actuator for closing and opening a closure system. The gate actuator comprises a DC electromotor and a motor control circuit. The motor control circuit comprises a shunt resistor and a current measurement circuit configured to measure the current through the shunt resistor. The current measurement circuit comprises an amplifier part configured to convert the shunt voltage over the shunt resistor in an offset shunt voltage which is positive when the shunt current is positive as well as when the shunt current is negative. The current measurement circuit comprises also a comparators' part comprising a first comparator and a second comparator. The first comparator provides a first comparator signal to the MCU part when the offset shunt current is higher than a first predetermined voltage value and the second comparator provides a second comparator signal to the MCU part when the offset shunt voltage is lower than a second predetermined voltage value. And, the MCU part interrupts the electromotor when the first comparator signal or the second comparator signal is received.

## Description

### Technical field

The present invention relates to an electrically operated gate actuator for hinging a closure member to a support. The present invention further relates to a closure system comprising the gate actuator which is in an embodiment of the invention an electrically operated hinge. The present invention further relates to a method for regulating the braking force of an electromotor of a gate actuator.

### Background art

Electrically operated hinges are known for indoor applications. Examples are disclosed in US 11,072,964 B2 and US 11,639,625 B2 which both disclose an electrically operated hinge for hinging a closure member to a support. The hinge comprises: a support hinge member and a gate hinge member pivotably mounted on the support hinge member. The support hinge member includes: a support leaf configured to be fixed to the support and a cylinder barrel which extends between a first end and a second end in a longitudinal direction and which forms a knuckle of the hinge. The gate hinge member includes: a gate leaf configured to be fixed to the closure member; and at least one further knuckle of the hinge situated adjacent the cylinder barrel. The hinge further comprises an electrically operated actuator integrated within the knuckles of the hinge and configured to actuate the hinge.

The electrically operated hinges are using an electromotor to rotate the gate part relative to the fixed part of the closure system. The electromotor of electrically operated hinges for closure systems, and also of gate actuators, is controlled by a motor control circuit. In such known closure systems, the electromotor and gearbox are often damaged by high external forces and the electronics is often damaged by high generated voltages.

### Disclosure of the invention

It is an aim of the present invention to provide an improved electrically operated gate actuator and an improved method for regulating the braking force of an electromotor of a gate actuator.

This aim is realized by the gate actuator according to the invention comprising a DC electromotor configured to rotate the hinged connection between the closure member and the support causing the closure member to rotate relatively to the support and a motor control circuit electrically connected with the DC electromotor for controlling the DC electromotor, wherein the motor control circuit comprises a shunt resistor positioned in a conductive path between the DC electromotor and the power supply and comprises a current measurement circuit configured to measure the current through the shunt resistor, wherein the current measurement circuit comprises
- an amplifier part (52) configured to receive the shunt voltage (34) over the shunt resistor (98) and to amplify and convert the shunt voltage to an offset shunt voltage (53) which is positive when the shunt current is positive as well as when the shunt current is negative,
- a comparators' part comprising a first comparator and a second comparator wherein the first comparator is configured to determine if the offset shunt voltage is higher than a first predetermined voltage value and wherein the second comparator is configured to determine if the offset shunt voltage is lower than a second predetermined voltage value,
- a common mode voltage part configured to set a common mode voltage for the amplifier part, and
- a micro controller unit part in communication with the comparators' part, the common mode voltage part and the DC electromotor,

wherein the amplifier part is configured to amplify the shunt voltage to an amplified shunt voltage and to add the amplified shunt voltage to the common mode voltage in order to convert the shunt voltage in an offset shunt voltage which is positive when the shunt current is positive as well as when the shunt current is negative
wherein the comparators' part is configured to provide a first comparator signal to the MCU part when the offset shunt voltage is higher than a first predetermined voltage value and to provide a second comparator signal to the MCU part when the offset shunt voltage is lower than a second predetermined voltage value, and
wherein the MCU part is configured to interrupt the electromotor when the first comparator signal or the second comparator signal is received.

The gate actuator according to this invention allows to measure motor current changes very fast. As a result, very fast action can be taken when the motor current is changing rapidly and damages to the electromotor or to the gearbox can be avoided.

Another advantage and effect of the present invention is that negative currents can be measured. The measuring of the negative currents allows a better control of the braking on the electromotor.

In some embodiments of the invention, the common mode voltage part comprises a buffer configured with a buffer input electrically connected with the MCU part and a buffer output electrically connected with the amplifier part.

In some embodiments of the invention, the amplifier part comprises a first resistor in the conductive path between the power supply side of the shunt resistor and the minus pin of the difference amplifier and a third resistor in the conductive path between the motor side of the shunt resistor and the plus pin of the difference amplifier, wherein both resistors, the first resistor and the third resistor, have a tolerance of 0,1%.

The resistors with a low tolerance of 0,1% ensure that there are minimal offsets in the current measurements. These minimal offsets allow to regulate the configuration, for example by regulating the voltage in the common mode voltage part circuit when the motor is off and thus the current must be 0A.

In some embodiments of the invention, the output of the amplifier part is electrically connected with the IN- pin of the first comparator and with the IN+ pin of the second comparator.

In some embodiments of the invention, the motor control circuit comprises at least one low pass filter to stabilize the voltage signal for use in the MCU part.

As the motor control voltage is the motor voltage modulated by the pulse width modulated (PWM) frequency, it is hard to use the voltage in the processor to control the behaviour of the motor. By passing the voltage signal through the low pass filter the signal is stabilized.

In some embodiments of the invention, the comparators' part is positioned in the motor control circuit before the low pass filter.

This has the effect that the comparators are able to use the fast-changing voltage signal while the normal motor control via the processor is able to use the stabilized signal that passed the low pass filter.

In some embodiments of the invention, the first predetermined voltage value and the second predetermined voltage value are based on the allowed stress of the motor.

By aligning the specific strengths of the motor with the predetermined limit values, a safe operation of the system can be guaranteed. The motor is protected against damages.

In some embodiments of the invention, the first predetermined current value is configured to set a limit to the braking force.

In some embodiments of the invention, the second predetermined voltage value is configured to set a limit on the driving force.

In some embodiments of the invention, the first predetermined voltage value and second predetermined voltage value are symmetric with respect to a bias value, wherein the bias value is determined by the common mode voltage.

In some embodiments of the invention, the MCU part, which is configured to interrupt the electromotor, is configured to interrupt the electromotor by disabling MOSFETs in the motor control circuit.

The aim of the present invention is further realized by the method for regulating the braking force of an electromotor of a gate actuator, the method comprising
- measuring the shunt voltage over a shunt resistor in a conductive path between the power supply and the electromotor,
- amplifying the shunt voltage to create an offset shunt voltage wherein the amplification circuit is adding the shunt voltage to a common mode voltage, wherein the common mode voltage is higher than the largest negative shunt voltage,
- passing the offset shunt voltage through a low pass filter to become a stabilized offset shunt voltage,
- receiving the stabilized offset shunt voltage in the controller to regulate the braking.

### Brief description of the drawings

The invention will be further explained by means of the following description and the appended figures.
Figure 1 shows a perspective view of a closure system according to the present invention.
Figure 2 shows a hinge according to the present invention assembled as part of a closure system.
Figure 3 shows a rear view of a hinge according to the present invention.
Figure 4 shows a front side exploded view of a hinge according to the present invention.
Figure 5 shows a rear side exploded view of a hinge according to the present invention.
Figures 6A and 6B show a rear view, respectively front view, of a support hinge member of a hinge according to the present invention.
Figure 7 shows a horizontal cross-section through a hinge according to the present invention.
Figure 8 shows a schematic view of a motor control circuit 100 for the DC electromotor according to an embodiment of the invention.
Figure 9 is a motor control circuit illustrating the location of the shunt resistor in the motor control circuit.
Figure 10 shows a perspective view of a closure system with a gate actuator separated from the hinges according to an embodiment of the invention.
Figure 11 is a diagram illustrating the main parts of the electronic circuit according to an embodiment of the invention.
Figure 12 illustrates a current measurement circuit taking the shunt voltage over the shunt resistor as input according to an embodiment of the invention.
Figure 13 illustrates an amplifier part of the current measurement circuit according to an embodiment of the invention.
Figure 14 illustrates a Common Mode Voltage part of the current measurement circuit according to an embodiment of the invention.
Figure 15 illustrates a comparators' part of the current measurement circuit according to an embodiment of the invention.

### Description of the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "substantially" includes variations of +/- 10% or less, preferably +/-5% or less, more preferably +/-1 % or less, and more preferably +/-0.1% or less, of the specified condition, in as far as the variations are applicable to function in the disclosed invention. It is to be understood that the term "substantially A" is intended to also include "A".

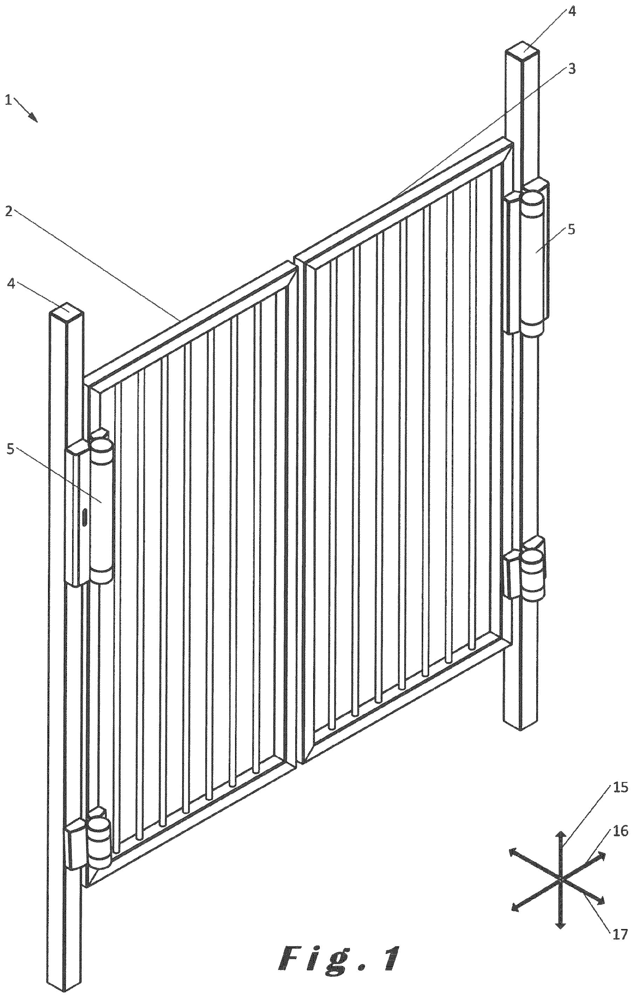

Figure 1 shows a perspective view of a double wing gate 1 using hinges according to the present invention. The double wing gate 1 comprises a lock gate wing 2 and a striker gate wing 3. The lock gate wing 2 may be provided with a lock assembly and the striker gate wing 3 may be provided with a striker assembly. However, in the illustrated embodiment, no lock assembly and striker assembly are provided. Each gate wing 2, 3 is hingedly connected to a support 4 by means of an upper hinge 5 and a lower hinge. The upper hinge 5 will be described in detail below and is an electrically operated hinge according to the present invention. The lower hinge is a commonly known hinge which adds additional support to the closure system.

More generally, the present invention relates to a closure system having first member and a second member that are hingedly attached to one another by means of one or more hinges 5. The first member is typically a fixed support 4, such as a wall or a post, while the second member is typically a moveable closure member 2, 3, such as a gate or a door.

The general directions and orientations are also indicated in figure 1. More specifically, there is the upright direction 15, the width direction 16 and the depth direction 17. These three directions 15, 16, 17 are generally substantially perpendicular to one another. The upright direction 15 in practice substantially coincides with the vertical direction. The width and dept directions 16, 17 together form a substantially horizontal plane.

In figure 1, both hinges 5 are identical to one another. It is only their orientation that is different. More specifically, closure member 2 is a left-handed gate and closure member 3 is a right-handed gate. The hinges 5 both extend in the upright direction 15 with the left hinge and the right hinge being turned upside down with respect to one another.

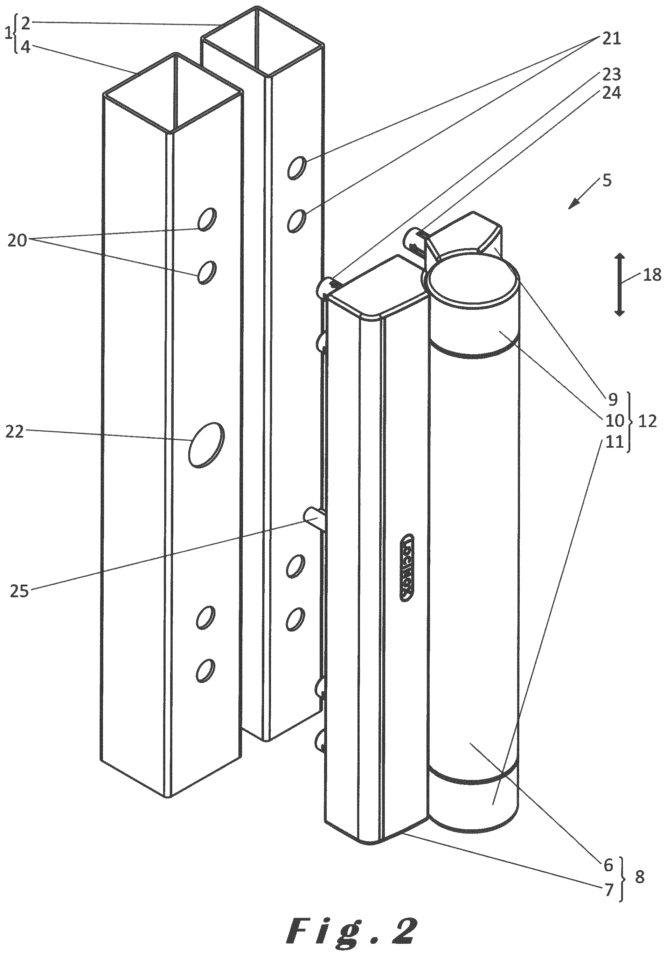

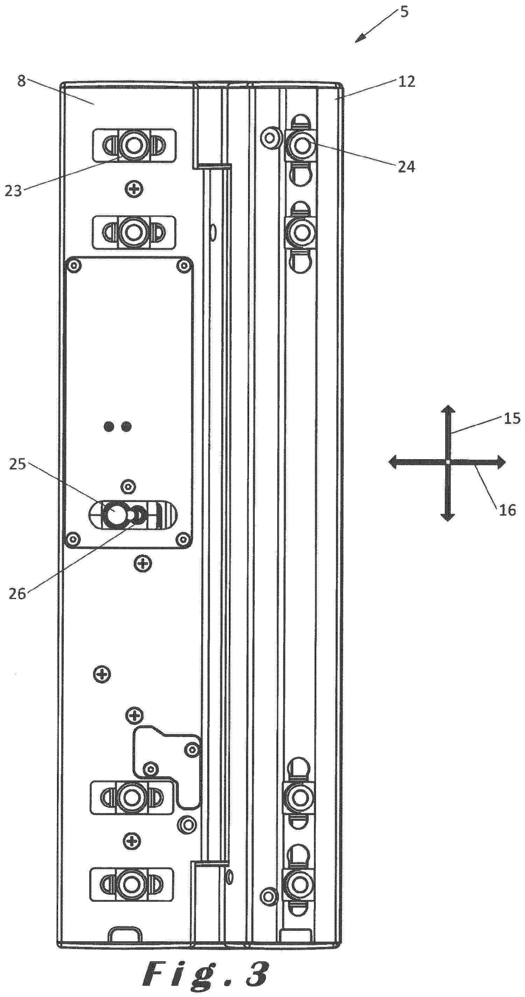

Figures 2 and 3 illustrate the assembling of the hinge 5 as part of the closure system 1. The hinge 5 generally comprises a support hinge member 8 to be mounted on the support 4 and a gate hinge member 12 to be mounted on the closure member 2, 3. The support hinge member 8 includes a support leaf 7 and a central knuckle 6 which extends in a longitudinal direction 18 between a first end and a second end. In use, the longitudinal direction 18 coincides with the upright direction 15. The gate hinge member 12 includes a gate leaf 9 and two knuckles 10, 11 which are adjacent opposite ends of the central knuckle 6. The illustrated hinge 5 is a butterfly hinge.

It will be appreciated that, in other embodiments, the hinge may include more or fewer knuckles. Of particular note is that the hinge may also be formed as a barrel hinge where each hinge member comprises a single knuckle.

As shown in figure 2, the support 4 and closure member 2 are formed by hollow tubular members. Such a hollow tubular member is common in outdoor applications (e.g. as part of a fence) and usually has square or rectangular cross-sections with external dimensions of 4 cm, 5 cm or 6 cm (e.g. a rectangular cross-section of 3x6 cm or 4x6 cm). The dimensions of the support 4 and the closure member 2 may be the same. However, often the support 4 is wider than the closure member 2 as in the illustrated embodiment.

In order to assemble the hinge 5 as part of the closure system, use is made of fixture sets 23, 24. Suitable fixture sets 23, 24 are disclosed in EP1907712 or EP3575617 or WO2024156376 which are incorporated herein by reference. Each fixture set 23, 24 is pre-mounted on the rear side of the hinge 5 with fixture sets 23 being on the support hinge member 8 and fixture sets 24 being on the gate hinge member 12. For each fixture set 23, 24, a fixation opening 20, 21 is provided in the closure system 1. More specifically, the support 4 includes several fixation openings 20 and the gate 2 also includes several fixation openings 21. The pattern of fixation openings 20, 21 is identical in the support 4 and the closure member 2. This aids in easily placing the hinge 5 in the required orientation for both left-handed and right-handed gates 2, 3.

Illustrated in figure 2, an additional opening 22 is provided in the support 4. This opening 22 is intended to receive a power cable 25 extending from the hinge 5. The opening 22 may also be used for any other optionally desired cables, e.g. a data cable or a communication cable. In the illustrated embodiment, as best shown in figure 3, the hinge 5 is provided with two outgoing cables, namely a power cable 25 and a communication cable 26.

Any opening 20, 21, 22 may be provided during production of the closure member 2 and/or support 4. Often, the hollow tubular members are produced by an extrusion process. The openings can then be applied by removing material, e.g. cutting, milling, grinding, etc. After the material removal, the tubular members can be provided with the desired finish, e.g. coating.

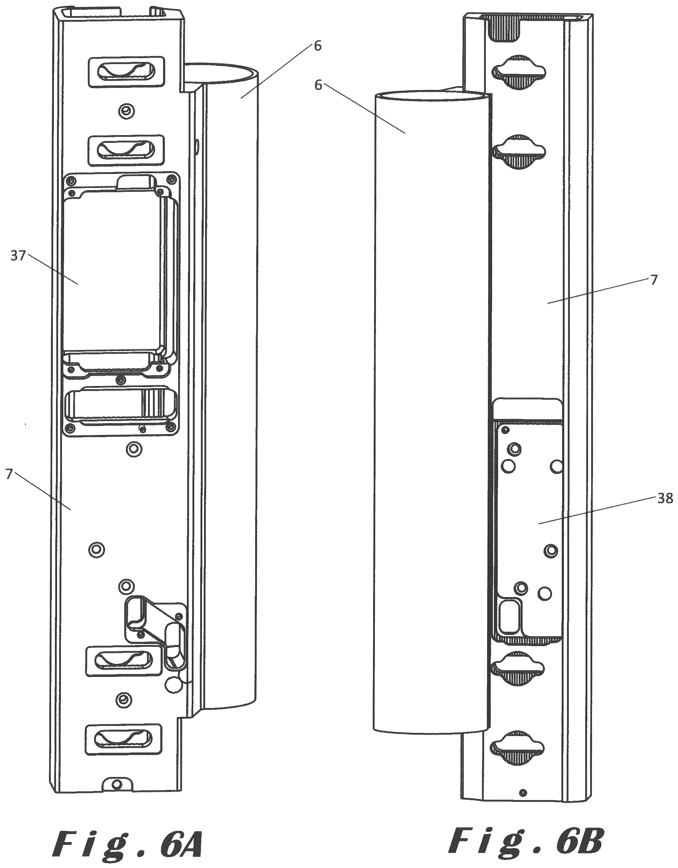

Figures 6A and 6B show the base constructional element which forms the support hinge member 8. In the illustrated embodiment, this element is a metal component (particularly aluminium) to provide the desired strength and robustness for use as a heavy duty hinge. The base element may be made by an extrusion process followed by material removal, e.g. milling, cutting, drilling, grinding, etc. to arrive at the element shown in figures 6A and 6B. Naturally, other manufacturing processes are known, e.g. casting.

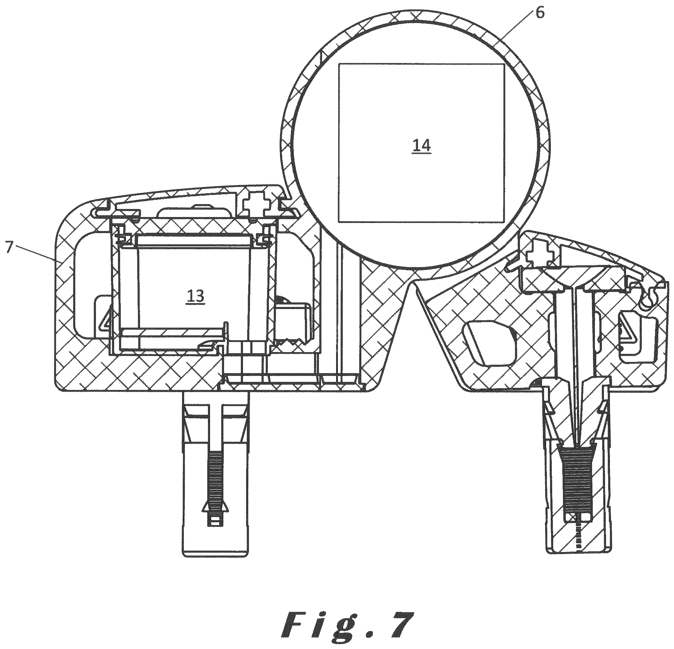

As schematically shown in figure 7, the support leaf 7 is largely hollow and provides space for placing an electronic control module 13. A connection (not shown) is formed between the hollow interiors of the support leaf 7 and the cylinder barrel 6. Via this connection, a cable (not shown) can be routed between the electronic control module 13 and an electric actuator 14 positioned in the cylinder barrel 6. The support leaf 7 is also provided with a first access opening 37 and a second access opening 38 to allow placing the electronic control module 13 inside the support leaf 7. The latter is shown in Figures 6A and 6B.

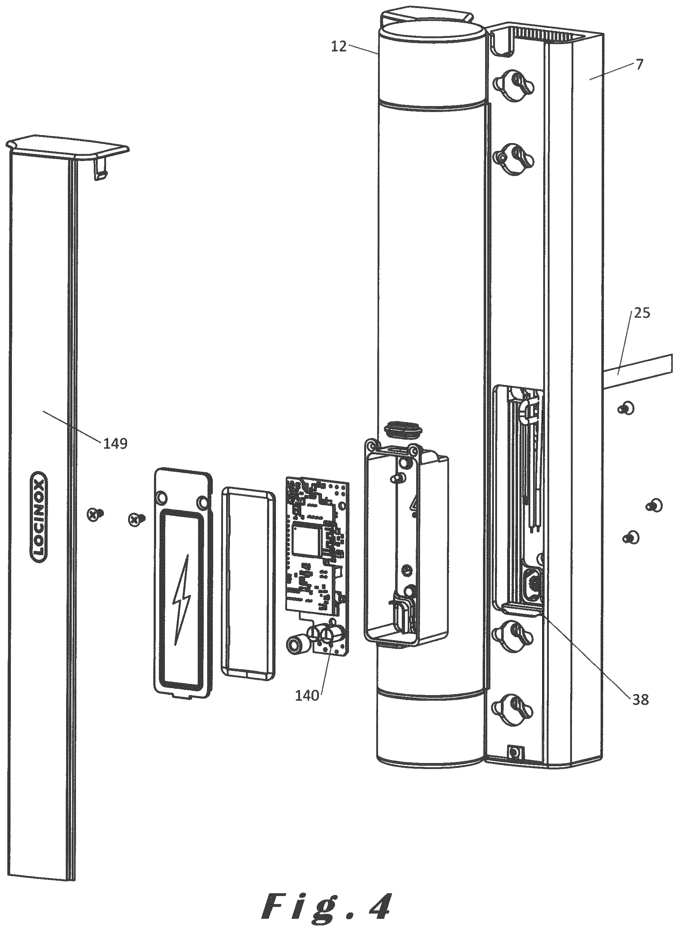

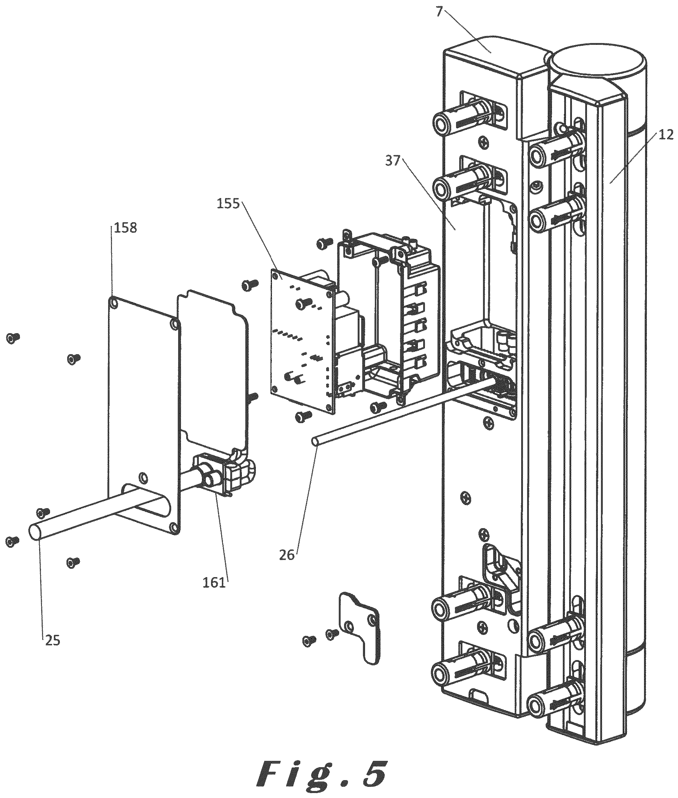

Further details of the internal placement of the electronic control module 13 will be described in relation to figures 4 and 5.

In the illustrated embodiment, the power cable 25 enters the rear side of the support hinge member 8 and is received in a cable receiving member 161. This cable receiving member 161 is slidably received in the support leaf 7. The position of the cable receiving member 61 with respect to the hinge 5 is adjustable, just as the fixture sets 23. In the illustrated embodiment, also a data cable 26 extends through the cable receiving member 61. From the cable receiving member 61, power cables are provided which provide power to the electronic control module 13.

In the illustrated embodiment, the electronic control module 13 are divided over two components placed above one another over substantially the entire length of the support leaf 7. As illustrated in figure 4, the lower part of the electronic control module 13 is be positioned in the support leaf 7 via the access opening 38 in the leaf 7. This access opening 38 is eventually closed by a cover 149. This cover 149 is clicked onto the support leaf 7.

Further, as illustrated in figure 5, the upper part of the electronic control module 13 is positioned in the support leaf 7 via the access opening 37 in the rear of the leaf 7. This access opening 37 is eventually closed by a cover 58 that is fastened to the support leaf 7.

Via each access opening 37, 38 the electronic control module 13 can be assembled. To that end, in the illustrated embodiment, the electronic control module 13 comprises an upper printed circuit board (PCB) 155 and a lower PCB 140. Each PCB 140, 155 is enclosed by its own two-part electrical enclosure.

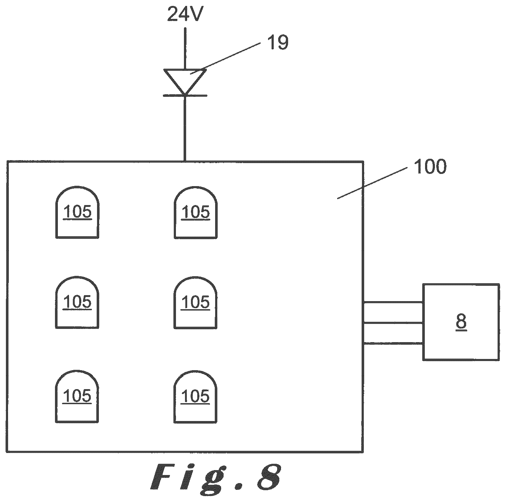

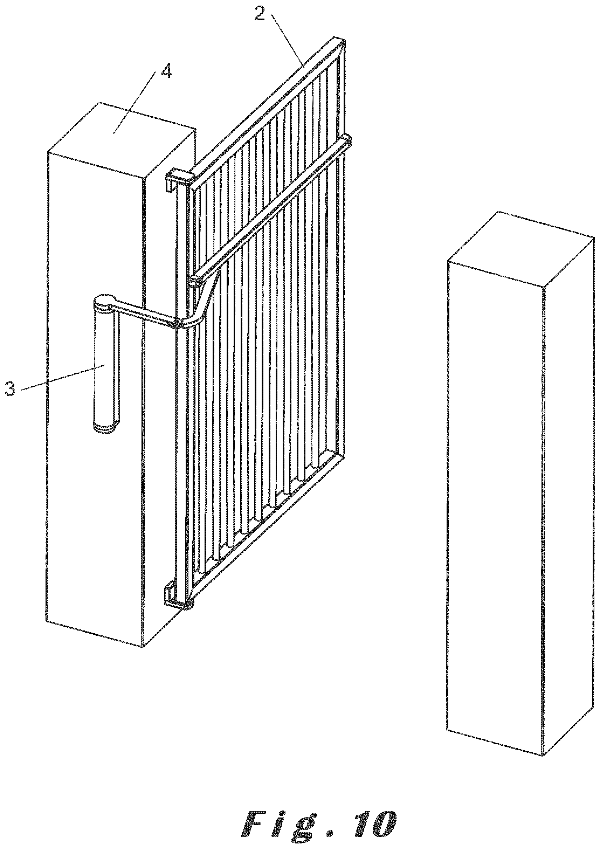

Figure 8 illustrates a schematic view of a motor control circuit 100 for a DC electromotor 8 in a gate actuator according to an embodiment of the invention wherein the gate actuator can be an electrically operated hinge 5 as described in Figures 1 to 7 but also other types of gate actuators such for example the gate actuator of Figure 10 wherein the gate actuator 3 is separated from the hinges. The brushless DC motor 8 is designed with three wires. The three wires are in connection with six MOSFETS 105 (Metal Oxide Semiconductor Field-Effect Transistor) which are controlling the voltage on the three wires. This configuration of a three-wire brushless DC motor controlled by 6 MOSFETS is known in the art.

The main input towards the motor controller is at 24V as illustrated in Figure 8. The MOSFETS 105 are in normal operation conducting a current from the main input towards the wires of the brushless DC motor 8. However, when the brushless DC motor 8 is generating current instead of consuming, the MOSFETS 105 are allowing that this current is conducted in the reverse direction, i.e. from the brushless DC motor 8 to the other components in the electrical circuit. To avoid damage in the larger electrical circuit, the motor control part of the electrical circuit is separated from other parts of the electrical circuit of the gate actuator and a diode 19 is provided before the 24V main input of the motor control circuit. For this reason, the electrical circuit of the gate actuator 3, 5 is divided in two parts whereby the motor control circuit 100 is located in the second part circuit. By providing the diode 19 at this position, no current can run from the motor control circuit part towards the other parts of the electrical circuit of the gate actuator. A situation wherein current is generated by the brushless DC motor is when someone is pushing on the gate or when the gate is braking.

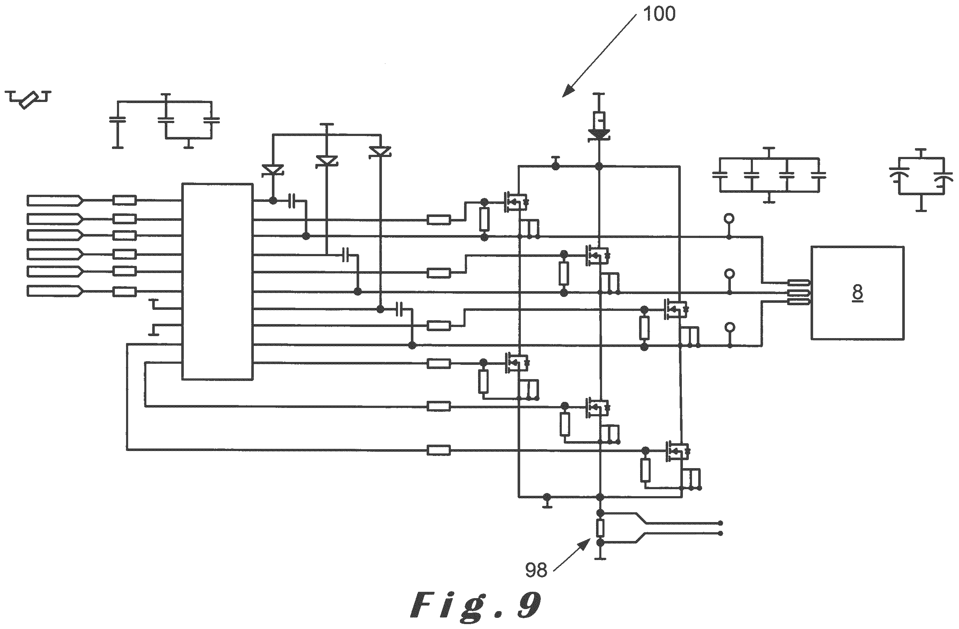

The motor control circuit 100 comprises a shunt resistor 98 positioned in the electrical circuit between Ground (GND) on one side of the shunt resistor 98 and on the other side connected to three of the six MOSFETs as illustrated in Figure 9. By this positioning in the electric circuit the shunt resistor 98 allows to measure the chopped current between the three phase power lines of the motor controller and the voltage source.

During the control of the motor, two different actions happen at the same time. Based on the position of the rotor (detected by hall sensors) a single combination of a top and bottom MOSFET can be on. Therefore, there are 6 difference options. Combined with this, a pulse width modulated (PWM) signal is applied to the top MOSFET to control the power and the speed of the motor. This is generally known as the throttle of the motor. In this case, when power is delivered to the motor and when the top MOSFET is on, the current through the shunt resistor 98 is positive. And, when power is delivered to the motor and the top MOSFET is off, the current is zero.

Depending on the behaviour, the inverse of the PWM signal can be applied to the bottom MOSFET as well. This will cause the motor system to actively brake when needed. When the motor is acting as generator, i.e. during braking or when the gate is manually pushed open, the current through the shunt resistor 98 is negative.

The shunt resistor 98 is in the embodiment of Figure 9 positioned on the Low side of the motor control circuit 100. In an alternative embodiment, the shunt resistor 98 can be positioned in the electric circuit at the high-side of the motor control circuit. In that case, the shunt resistor is positioned between the diode 19 and the MOSFETs 42.

The current through the shunt resistor 98 is converted to a shunt voltage. The shunt voltage 34 is amplified to an amplified shunt voltage. The overall conversion with amplification can for example be 180 mV/A. This shunt voltage over the shunt resistor 98 is proportional to the current flowing through the shunt resistor (V = R * I).

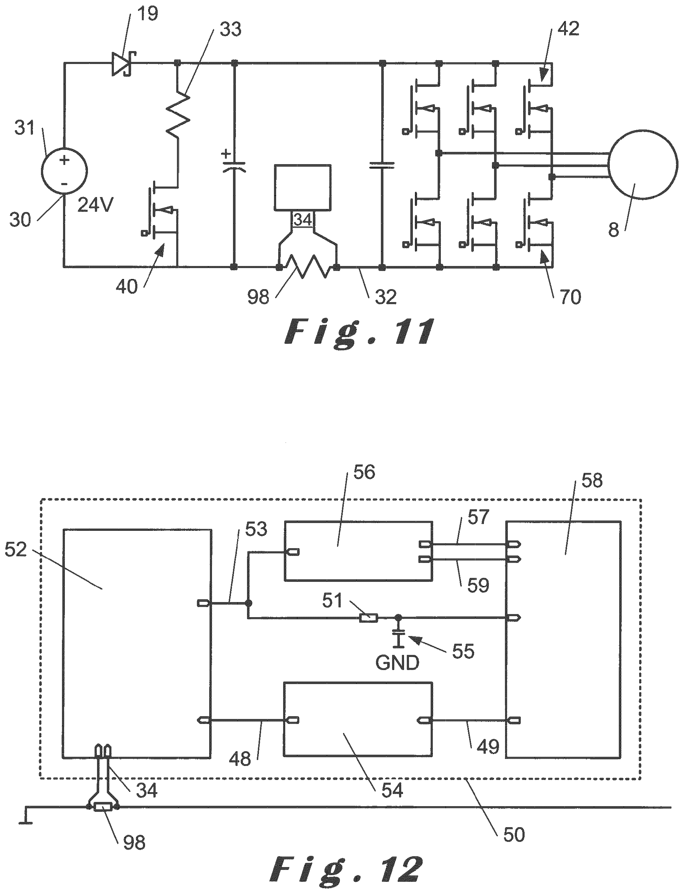

Figure 11 is a diagram illustrating the main parts of the electronic circuit. The electronic circuit comprises a connection to a power supply 31. The power supply 31 is on the one hand electrically connected in series with a diode 19, a brake resistor 33 and a brake Mosfet 40. And, on the other hand, the power supply is also electrically connected to a motor control circuit 100 comprising six (6) Mosfets and a connection to a BLDC motor 8. The BLDC motor has 3 phases and each phase is connected with two Mosfets as illustrated in Figure 11. For the two Mosfets connected with each phase, a high side Mosfet 42 is connected with the conductive path connected with the diode 19 and the low side Mosfet 70 is connected with the conductive path towards the negative pole 30 of the power supply 31. The shunt resistor 98 is positioned in the conductive path between the low side Mosfets 70 and the negative pole 30 of the power supply 31. The shunt resistor 98 allows to measure the motor control current 32 by measuring the shunt voltage 34 over the shunt resistor 98. The shunt voltage 34 over the shunt resistor 98 is proportional to the shunt current 32 flowing through the shunt resistor 98.

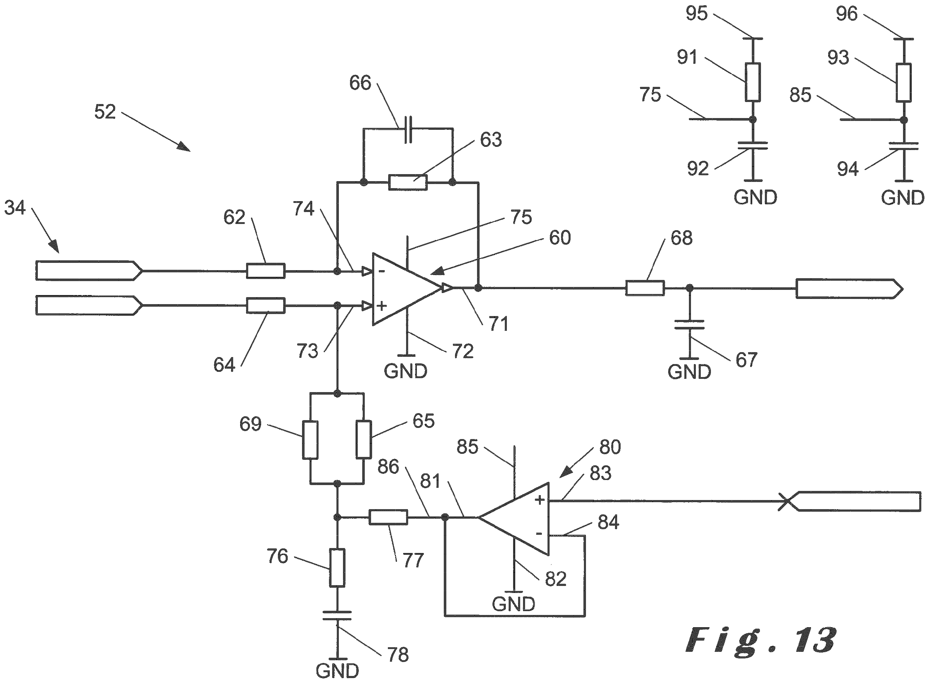

The shunt voltage 34 is used as input into a current measurement circuit 50. This is illustrated in Figure 12. In a first part 52 of the current measurement circuit 50, the shunt voltage 34 over the shunt resistor 98 is received and an offset shunt voltage 53 is output. First part 52 is illustrated with more details in Figure 13. The shunt voltage 34 over the shunt resistor 98 is amplified by an operational amplifier (Op-amp) 60 which is a difference amplifier. The gain of the difference amplifier, in the embodiment of Figure 13 is 35.7 V/V. The Op-amp 60 has an output 71, a negative power contact 72, a positive power contact 75, an inverting input (`- pin') 74 and a non-inverting input ('+ pin') 73. The gain is determined by a first resistor 62 positioned in the conductive path between the positive connection of the shunt voltage 34 and the inverting input 74 of the Op-amp 60, a second resistor 63 in a conductive path between the inverting input 74 of the Op-amp 60 and the output 71 of the Op-amp 60, a third resistor 64 in the conductive path between the negative connection of the shunt voltage 34 and the non-inverting input 73 (the "+" input) of the Op-amp 60, and a fourth resistor 65 in the conductive path between the non-inverting input 73 of the Op-amp 60 and the filtered output of Op-amp 80. A feedback capacitor 66 is positioned in a conductive path over the second resistor 63. The feedback capacitor 66 increases the stability of the Op-amp 60. The output 71 of the Op-amp 60 is further electrically connected with an isolation resistor 68. Subsequently to the isolation resistor 68, a load capacitor 67 is positioned between the isolation resistor 68 and Ground. The load capacitor 67 and the isolation resistor 68 form a lowpass filter with a predetermined cut-off frequency. In the embodiment of Figure 13, the cut-off frequency is 1,5 MHz. Subsequently to the fourth Resistor 65, the conductive path splits in a high-frequency conductive path towards Ground and a low-frequency conductive path towards a second Op-amp 80, wherein the conductive path is connected to the output 81 of the second Op-amp 80. In the conductive path between the fourth resistor 65 and Ground is a fifth resistor 76 positioned. And, in the conductive path between the fourth resistor 65 and the output 81 of the second Op-amp is positioned a sixth resistor 77. And, over the fourth resistor 65 is positioned a seventh resistor 69 in parallel to the fourth resistor 65. The sixth resistor 77 and the fifth resistor 76 have the same value. And, the sum of this resistance value and the parallel combination of the fourth resistor 65 and the seventh resistor 69 results in the same value as the value of the fourth resistor 65. The fourth resistor 65 is going to a common mode voltage source made with Op-amp 80. As the output of the second Op-Amp 80 is inductive, this is compensated with the fifth and sixth resistors and with third capacitor 78. This increases the overall resistance. Therefore the seventh resistor 69 is added to bring back the overall resistance to the original value.

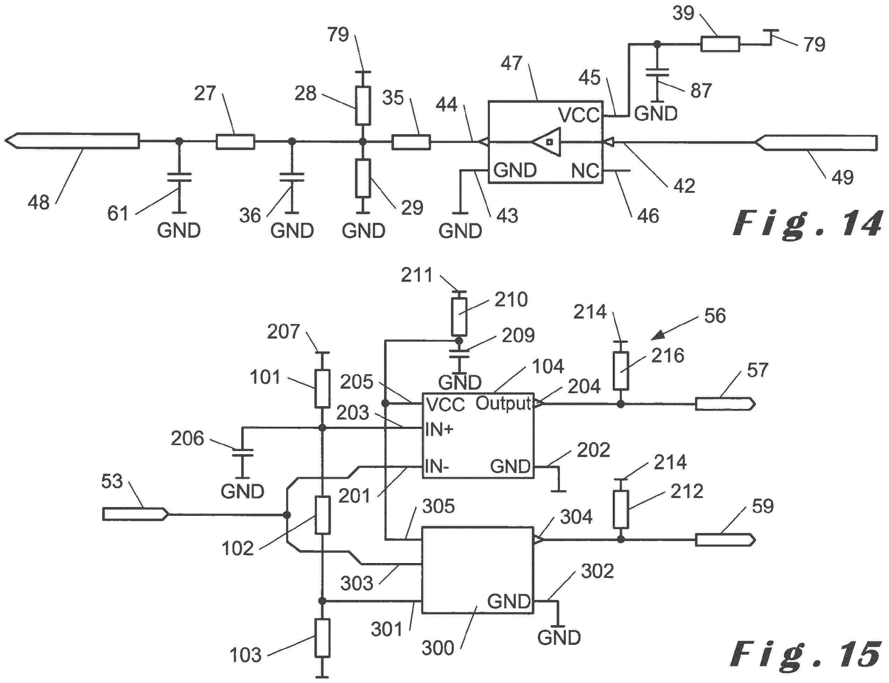

The second Op-amp 80 has an output 81, a negative power contact 82, a positive power supply contact 85, an inverting input 84 and a non-inverting input 83. The inverting input 84 is electrically connected to the output 81. And, the non-inverting input 83 receives a voltage input 48 from a fourth part 54 of the circuit 50. The fourth part 54 is described in more detail in Figure 14. The second Op-amp 80 is used as a voltage buffer and defines a common mode voltage 86 on the output of the second Op-amp 80. The common mode voltage 86 is added to the amplified shunt voltage to arrive at the offset shunt voltage 53. Further, a third capacitor 78 is positioned between the fifth resistor 76 and Ground. The second Op-amp 80, the sixth resistor 77, the capacitor 78 and the fifth resistor 76 form together a crossover network: this means that the high frequency path is through the capacitor 78 and the low frequency path is through Op-amp 80. The crossover frequency is in the embodiment of Figure 13 around 100 kHz. The crossover circuit makes that the Op-Amp only needs to make slow current variations causing that a slower and cheaper Op-Amp can be used.

The positive power supply contact 75 of the first Op-amp 60 is connected to a conductive path between an eight resistor 91 and a fourth capacity 92. The eight resistor 91 is at the other side electrically connected with a first power supply 95, wherein the first power supply 95 is in the embodiment of Figure 13, 3,3V. And, the fourth capacitor 92 is on the other side electrically connected to Ground. The eight resistor 91 and the fourth capacity 92 filter together the supply 75 of the first Op-amp 60.

The positive power supply contact 85 of the second Op-amp 80 is connected to a conductive path between a nineth resistor 93 and a fifth capacity 94. The nineth resistor 91 is at the other side electrically connected with a second power supply 96, wherein the second power supply 96 is, in the embodiment of Figure 13, 3,3V. And, the fifth capacitor 94 is on the other side electrically connected to Ground. The nineth resistor 93 and the fifth capacity 94 filter together the supply 85 of the second Op-amp 80.

The current measurement circuit 50 is configured such that the common mode voltage 86 has a value to which the amplified shunt voltage derived from the shunt voltage 34 can be added or subtracted (when negative). In the embodiment described in the Figures, the common mode voltage 86 is arranged to be approximately 1,5V. And, the shunt current 32 is translated to a shunt voltage 34 with a factor of 5mV/A (i.e. the shunt resistor is 5mOhm). The amplifier amplifies this shunt voltage 34 in the embodiment of the Figures with a factor 35.7 and add the amplified voltage value to the common mode voltage. Negative shunt currents 32 result in a voltage above 1,5V and positive shunt currents 32 result in a voltage below 1,5V but always still positive. Alternative embodiments can be configured wherein the shunt voltage 34 can be added and subtracted from the common mode voltage 86. It's essential that the common mode voltage and the components in the amplifier part are configured such that the output voltage 53 towards the comparators' part is never negative. By this configuration negative currents through the shunt resistor 98 can be measured. One of the advantages of measuring negative currents through the shunt resistor is that the braking force can be regulated. The braking force can for example be regulated to be stable at a predetermined value which is dependent on the hardware design and the maximum force values that this hardware design can take.

Figure 15 illustrates in more detail a second part 56 of the current measurement circuit 50 illustrated in Figure 12. This second part 56 of the current measurement circuit 50 has as input the output voltage 53 of the first part 52, also called the amplifier part 52, and has as output two signals towards a third part 58 of the current measurement circuit 50, also called the controller part 58. The second part 56 itself is also called the comparators' part 56. The comparators' part 56 comprises two comparators, a first comparator 104 and a second comparator 300. The first comparator 104 is at the IN- pin 201 electrically connected with the output voltage 53. The IN+ pin 203 is electrically connected to a conductive path connected at one side to a sixth capacitor 206 and at the other side to a first fixed limit resistor 101. And, the capacitor 206 is at the other side electrically connected to Ground and the first fixed limit resistor 101 is at the other side connected to a power supply 207 which is, in the embodiment of Figure 15, 3V. The GND pin 202 of the first comparator 104 is electrically connected to Ground. The Output pin 204 of the first comparator 104 is electrically connected to a conductive path connected at one side to the micro controller unit (MCU) part 58 of the measurement circuit 50 and on the other side to a first pull-up resistor 216 which resistor 216 is at the other side electrically connected to a power supply 214 which is in the embodiment of Figure 15 3,3V. The latter connection provides a first comparator signal 57 to the MCU part 58. This first comparator signal 57 provided to the MCU part 58 is also illustrated on Figure 12. The Vcc pin 205 of the first comparator 104 is in parallel connected to the Vcc pin 305 of the second comparator 300 and a conductive path connected at one side to a filter capacitor 209 and at the other side to a filter resistor 210, whereby the filter capacitor 209 is at the other side connected to Ground and the filter resistor 210 is at the other side connected to a power supply 211 which is in the embodiment of Figure 15 24V. The IN+ pin 303 of the second comparator 300 is electrically connected to the amplifier output voltage 53. The IN- pin 301 of the second comparator 300 is electrically connected to a conductive path connected at one side to a third fixed limit resistor 103 and at the other side to a second fixed limit resistor 102, whereby the fixed limit resistor 103 on the other side electrically is connected to Ground and whereby the fixed limit resistor 102 on the other side electrically is connected in parallel to the IN+ pin 203 of the first comparator 104, to the resistor 101 in connection with power supply 207 and to the capacitor 206 in connection with Ground. The GND pin 302 of the second comparator is electrically connected to Ground. And the output 304 of the second comparator is electrically connected in parallel to the MCR part 58 of measurement circuit 50 and a second pull-up resistor 212 which is at the other side electrically connected to a power supply 214. The power supply 214 is in the embodiment of Figure 15 3,3V. With the connection of the output 304 of the second comparator 300 with the MCU part 58, a second comparator signal 59 is provided to the MCU part 58 of the circuit 50. The second comparator signal 59 to the MCU part is also illustrated on Figure 12.

The comparators' part 56 allows fast detection of a too high or too low amplifier voltage signal 53. The fixed limits of when the voltage 53 is too high or too low is set by the resistors 101, 102 and 103. In the embodiment of Figure 15, if the offset shunt voltage 53, i.e. the output of the amplifier part, goes above 2,835V, i.e. the voltage at the IN+ pin of the first comparator, the first comparator 104 will trigger the output 204 and the first comparator signal 57 provided to the MCU part 58 is set to low. The MCU part 58 can subsequently immediately generate an interrupt in the processor towards the electromotor. Further, if the offset shunt voltage 53 goes below 0,165V, i.e. the voltage at the IN- pin of the second comparator, the second comparator 300 will trigger the output 304 and the second comparator signal 59 provided to the MCU part 58 is set to low. The MCU part 58 can subsequently immediately generate an interrupt in the processor in the same way as when the voltage is too high. The fixed limits of the voltage are calculated taking into account the allowed stress range of the motor. Therefore, when a different motor is used, a different stress range may be calculated. In the embodiment of the Figures, the voltage limits 2,835V and 0,165V are corresponding respectively with -7,48A of the shunt current and 7,48A of the shunt current.

Capacitor 206 creates a first order lowpass filter in combination with the resistor 101, the resistor 102 and the resistor 103. This first order lowpass filter makes the threshold voltages more stable resulting in less variation and lower noise.

The first comparator 104 and the second comparator 300 have an open drain output. Therefore, these are at their output completed with the first pull-up resistor 216 and the second pull-up resistor 212 respectively, both connected to the same power supply 214 wherein the power supply in the embodiment of Figure 15 is 3,3V. This may be the same logic power supply as the microcontroller in the MCU part 58.

The filter resistor 210 and the filter capacitor 209 filter the supply of the first comparator 104 and the second comparator 300. This ensures that that the comparator behaves as expected even if there is some disturbance on the 24V supply.

The output voltage 53 of the amplifier part 52 is in parallel to the electrical connection to the comparators part 56 connected to a low pass filter resistor 51 which is further in his turn in parallel electrical connection to a low pass filter capacitor 55 and to the MCU part 58, whereby the low pass filter capacitor 55 is at the other side electrically connected to Ground. The low pass filter resistor 51 and the low pass filter capacitor 55 are used to low pass filter the signal. In the embodiment of Figure 12, the -3dB point is at 2KHz. This low pass filter is useful in order to sample relatively slow. The low pass filter is then used as an anti-aliasing filter.

The current measurement circuit 50 comprises a fourth part 54 which is electrically connected to the amplifier part 52 and the MCU part 58. The fourth part 54 is also called the Common Mode Voltage (CMV) part 54. The CMV part 54 receives a PWM signal 49 from the MCU part 58. And, the amplifier part 52 receives a CMV voltage output 48 from the CMV part 54. The CMV part 54 is illustrated in more detail in Figure 14. The CMV part 54 of the circuit 50 determines the common mode voltage 86 in the first part 52 of the circuit 50. The PWM signal 49 coming from the MCU part 58 is inputted in a buffer 47. The VCC pin 45 of the buffer 47 is in parallel electrically connected to a seventh capacitor 87 and a tenth resistor 39 wherein the resistor 39 is electrically connected to a reference power supply 79 and the seventh capacity 38 is electrically connected to Ground. The reference power supply 79 is, in the embodiment of Figure 14, 3V. The NC pin 46 of the buffer 47 remains unconnected. The GND pin 43 is obviously connected to Ground. The output pin 44 of the buffer 47 is electrically connected with a first voltage divider resistor 35 which is on his other side electrically connected to a parallel combination of two resistors, a second voltage divider resistor 29 which is on the other side electrically connected to ground and a third voltage divider resistor 28 which is on the other side electrically connected to the reference power supply 79. The three resistors together, the first voltage divider resistor 35, the second voltage divider 29 and the third voltage divider 28 form together the voltage divider and set the starting point for the common mode voltage as approximately half of the reference power supply 79 when the resistors 28 and 29 are identical. The reference power supply 79 is as mentioned above in the embodiment of Figure 14, 3V. The electrical path between the twelfth resistor 28 and the eleventh resistor 29, which is also connected with the first voltage divider resistor 35 is electrically connected to a parallel path of a eight capacitor 36 which is on the other side connected to Ground and a thirteenth resistor 27 which is on the other side connecting in parallel to a nineth capacitor 61 and to the first part 52 providing the CMV output voltage 48 to the amplifier part 52. The nineth capacitor 61 is on the other side electrically connected to Ground. The second and third voltage divider resistors 28, 29 create the starting point for the common mode voltage. The configuration of the circuit in Figure 14 allows to regulate this voltage. In the embodiment of Figure 14, the voltage of 1,5V is regulated +/- 48,4mV which results in a very accurate bias point. To regulate the voltage the PWM signal from the processor is controlled. By controlling the duty cycle of the PWM signal, the desired voltage for the common mode voltage can be very accurately controlled.

With the above-described configuration, fast current changes can be measured allowing to monitor the instantaneous motor current.

Summary of reference numbers:

| | |
|---|---|
| 1 | a double wing gate |
| 2 | a lock gate wing |
| 3 | a striker gate wing |
| 4 | a support |
| 5 | an upper hinge 5 |
| 6 | a central knuckle 6 |
| 7 | a support leaf |
| 8 | a support hinge member |
| 9 | a gate leaf 9 |
| 10 | a first knuckle of the gate hinge member |
| 11 | a second knuckle of the gate hinge member |
| 12 | a gate hinge member 12 |
| 13 | an electronic control module 13 |
| 14 | an electric actuator 14 |
| 15 | the upright direction |
| 16 | the width direction |
| 17 | the depth direction |
| 18 | a longitudinal direction |
| 19 | a diode |
| 20, 21 | a fixation opening |
| 22 | an additional opening |
| 23, 24 | fixture sets |
| 25 | a power cable |
| 26 | a communication cable 26 |
| 27 | a thirteenth resistor 27 |
| 28 | a third voltage divider resistor 28 |
| 29 | a second voltage divider resistor 29 |
| 30 | the negative pole |
| 31 | a power supply |
| 32 | the motor control current 32 / the shunt current 32 |
| 33 | a brake resistor 33 |
| 34 | the shunt voltage 34 |
| 35 | a first voltage divider resistor 35 |
| 36 | a eight capacitor 36 |
| 37 | a first access opening |
| 38 | a second access opening |
| 39 | a tenth resistor 39 |
| 40 | a brake Mosfet 40 |
| 42 | a high side Mosfet 42 |
| 43 | The GRD pin 43 of the buffer 47 |
| 44 | The output pin 44 of the buffer 47 |
| 45 | The VCC pin 45 of the buffer 47 |
| 46 | The NC pin 46 of the buffer 47 |
| 47 | a buffer 47 |
| 48 | a CMV voltage output 48 |
| 49 | a PWM signal 49 |
| 50 | a current measurement circuit 50 |
| 51 | a low pass filter resistor 51 |
| 52 | a first part 52 = amplifier part |
| 53 | an offset shunt voltage 53 |
| 54 | a fourth part 54 of the circuit 50 = Common Mode Voltage part 54 |
| 55 | a low pass filter capacitor 55 |
| 56 | a second part 56 of the current measurement circuit 50 = comparators' part |
| 57 | a first comparator signal 57 |
| 58 | a third part 58 of the current measurement circuit 50 = controller part |
| 59 | a second comparator signal 59 |
| 60 | an operational amplifier (Op-amp) 60 |
| 61 | a nineth capacitor 61 |
| 62 | a first resistor 62 |
| 63 | a second resistor 63 |
| 64 | a third resistor 64 |
| 65 | a fourth resistor 65 |
| 66 | A feedback capacitor 66 |
| 67 | a load capacitor 67 |
| 68 | an isolation resistor 68 |
| 69 | a seventh resistor 69 |
| 70 | the low side Mosfet 70 |
| 71 | an output 71 of Op-amp 60 |
| 72 | a negative power contact 72 |
| 73 | a non-inverting input ('+ pin') 73. |
| 74 | an inverting input ('- pin') 74 |
| 75 | a positive power contact 75 |
| 76 | a fifth resistor 76 |
| 77 | a sixth resistor 77 |
| 78 | a third capacitor 78 |
| 79 | a reference power supply 79 |
| 80 | a second Op-amp 80 |
| 81 | the output 81 of the second Op-amp 80 |
| 82 | a negative power contact 82 |
| 83 | a non-inverting input 83 |
| 84 | an inverting input 84 |
| 85 | a positive power supply contact 85 |
| 86 | a common mode voltage 86 |
| 87 | a seventh capacitor 87 |
| 91 | an eight resistor 91 |
| 92 | a fourth capacity 92 |
| 95 | a first power supply 95 |
| 96 | a second power supply 96 |
| 98 | a shunt resistor 98 |
| 100 | a motor control circuit |
| 101 | a first fixed limit resistor 101 |
| 102 | a second fixed limit resistor 102 |
| 103 | a third fixed limit resistor 103 |
| 104 | a first comparator 104 |
| 105 | a MOSFET |
| 140 | a lower PCB |
| 149 | a cover |
| 155 | an upper PCB |
| 161 | a cable receiving member |
| 201 | IN- pin 201 of the first comparator |
| 202 | The GND pin 202 of the first comparator 104 |
| 203 | The IN+ pin 203 of the first comparator |
| 204 | The Output pin 204 of the first comparator 104 |
| 205 | The Vcc pin 205 of the first comparator 104 |
| 206 | a sixth capacitor 206 |
| 207 | a power supply 207 |
| 209 | a filter capacitor 209 |
| 210 | a filter resistor 210 |
| 211 | a power supply 211 |
| 212 | a second pull-up resistor 212 |
| 214 | a power supply 214 |
| 216 | a first pull-up resistor 216 |
| 300 | a second comparator 300 |
| 301 | The IN- pin 301 of the second comparator 300 |
| 302 | The GND pin 302 of the second comparator |
| 303 | The IN+ pin 303 of the second comparator 300 |
| 304 | the output 304 of the second comparator |
| 305 | the Vcc pin 305 of the second comparator 300 |
| | |

Although aspects of the present disclosure have been described with respect to specific embodiments, it will be readily appreciated that these aspects may be implemented in other forms within the scope of the invention as defined by the claims.

## Claims

1. A gate actuator (3, 5) for closing and opening a closure system having a support (4) and a closure member (2) that are hingedly connected to each other, the gate actuator comprising:
- a DC electromotor (8) configured to rotate the hinged connection between the closure member and the support causing the closure member to rotate relatively to the support;
- a motor control circuit (100) electrically connected with the DC electromotor for controlling the DC electromotor, wherein the motor control circuit comprises a shunt resistor (98) positioned in a conductive path between the DC electromotor and the power supply and a current measurement circuit (50) configured to measure the shunt current through the shunt resistor, wherein the current measurement circuit comprises
- an amplifier part (52) configured to receive the shunt voltage (34) over the shunt resistor (98) and to amplify and convert the shunt voltage to an offset shunt voltage (53) which is positive when the shunt current is positive as well as when the shunt current is negative;
- a comparators' part (56) comprising a first comparator (104) and a second comparator (300) wherein the first comparator is configured to determine if the offset shunt voltage (53) is higher than a first predetermined voltage value and wherein the second comparator is configured to determine if the offset shunt voltage (53) is lower than a second predetermined voltage value;
- a common mode voltage part (54) configured to set a common mode voltage for the amplifier part (52), and
- a micro controller unit part (58) in communication with the comparators' part (56), the common mode voltage part (54) and the DC electromotor (8),
wherein the amplifier part (52) is configured to amplify the shunt voltage to an amplified shunt voltage and to add the amplified shunt voltage to the common mode voltage (86) in order to convert the shunt voltage (34) in an offset shunt voltage (53) which is positive when the shunt current is positive as well as when the shunt current is negative,
wherein the comparators' part (56) is configured to provide a first comparator signal to the MCU part when the offset shunt voltage (53) is higher than a first predetermined voltage value and to provide a second comparator signal (59) to the MCU part (58) when the offset shunt voltage (53) is lower than a second predetermined voltage value, and
wherein the MCU part (58) is configured to interrupt the electromotor when the first comparator signal or the second comparator signal is received.

2. The gate actuator according to claim 1, wherein the common mode voltage part comprises a buffer (47) configured with a buffer input electrically connected with the MCU part to receive a pulse width modulated, PWM, signal and a buffer output electrically connected with the amplifier part to provide the common mode voltage to the amplifier part.

3. The gate actuator according to any one of the preceding claims, wherein the amplifier part comprises a first resistor (62) in the conductive path between the power supply side of the shunt resistor and the minus pin of the difference amplifier and a third resistor (64) in the conductive path between the motor side of the shunt resistor and the plus pin of the difference amplifier, wherein both resistors, the first resistor and the third resistor, have a tolerance of 0,1%.

4. The gate actuator according to any one of the preceding claims, wherein the output of the amplifier part is electrically connected with the IN- pin of the first comparator and with the IN+ pin of the second comparator.

5. The gate actuator according to any one of the preceding claims, wherein the motor control circuit comprises at least one low pass filter to stabilize the voltage signal for use in the MCU part.

6. The gate actuator according to the preceding claim, wherein comparators' part is positioned in the motor control circuit before the low pass filter.

7. The gate actuator according to any one of the preceding claims, wherein the first predetermined voltage value and the second predetermined voltage value are based on the allowed stress of the motor.

8. The gate actuator according to any one of the preceding claims, wherein the first predetermined voltage value is configured to set a limit in the braking force.

9. The gate actuator according to any one of the preceding claims, wherein the second predetermined voltage value is configured to set a limit on the driving force.

10. The gate actuator according to any one of the preceding claims, wherein the first predetermined voltage value and second predetermined voltage value are symmetric with respect to a bias value, wherein the bias value is determined by the common mode voltage.

11. The gate actuator according to any one of the preceding claims, wherein the MCU part (58) which is configured to interrupt the electromotor is configured to interrupt the electromotor by disabling MOSFETs in the motor control circuit.

12. The gate actuator according to any one of the preceding claims, wherein the gate actuator is an electrically operated hinge comprising a support hinge member (8) and a gate hinge member (12), wherein the electromotor and the motor control circuit are assembled within the support hinge member.

13. A method for regulating the braking force of an electromotor of a gate actuator, comprising
measuring the shunt voltage over a shunt resistor in a conductive path between the power supply and the electromotor,
amplifying the shunt voltage to create an amplified shunt voltage wherein the amplification circuit is adding the amplified shunt voltage to a common mode voltage to create an offset shunt voltage, wherein the common mode voltage is higher than the largest negative amplified shunt voltage,
passing the offset shunt voltage (53) through a low pass filter to become a stabilized voltage,
receiving the stabilized voltage in the controller to regulate the braking.

14. A method for protecting an electromotor of a gate actuator, comprising
measuring the shunt voltage over a shunt resistor in a conductive path between the power supply and the electromotor,
amplifying and converting the shunt voltage to create an offset shunt voltage (53) wherein the amplification circuit is adding an amplified shunt voltage to a common mode voltage, wherein the common mode voltage is higher than the largest negative amplified shunt voltage,
comparing the offset shunt voltage in a first comparator with a first predetermined voltage value and in a second comparator with a second predetermined voltage value to create a first comparator signal towards the controller when the offset shunt voltage is higher than the first predetermined voltage value and a second comparator signal when the offset shunt voltage is lower than the second predetermined voltage value, and
interrupting the electromotor when a first comparator signal or a second comparator signal is received.
